# EUROPÄISCHE PATENTSCHRIFT

(11) **EP 4 248 236 B1**
(45) Veröffentlichungstag und Bekanntmachung des Hinweises auf die Patenterteilung: **15.10.2025**
(21) Anmeldenummer: 21815968.9
(22) Anmeldetag: 17.11.2021
(51) Int. Cl.: G01S 13/89, G01S 13/931, G01S 17/89, G01S 17/931, G01S 7/486, G01S 7/487

(54) **AKTIVES SENSORSYSTEM UND OBJEKTERKENNUNG**
ACTIVE SENSOR SYSTEM AND OBJECT DETECTION
SYSTÈME DÉTECTEUR ACTIF ET RECONNAISSANCE D'OBJET

(30) Priorität: 23.11.2020 DE 102020130884
(43) Veröffentlichungstag der Anmeldung: 27.09.2023
(73) Patentinhaber: Valeo Schalter und Sensoren GmbH, 74321 Bietigheim-Bissingen (DE)
(72) Erfinder: FERNANDEZ, Sergio, 74321 Bietigheim-Bissingen (DE); GUO, Shuyun, 74321 Bietigheim-Bissingen (DE)
(74) Vertreter: Pothmann, Karsten
(86) Internationale Anmeldenummer: PCT/EP2021/081940
(87) Internationale Veröffentlichungsnummer: WO 2022/106447

(56) Entgegenhaltungen:
- WO-A1-2016/067280
- US-A1- 2017 234 976
- US-B1- 9 080 866

## Beschreibung

Die vorliegende Erfindung betrifft ein Verfahren zum Betreiben eines aktiven Sensorsystems, wobei mittels des Sensorsystems zum Erzeugen einer ersten Punktwolke während eines ersten Messzeitraums und zum Erzeugen einer zweiten Punktwolke während eines zweiten Messzeitraums jeweils elektromagnetische Strahlung in eine Umgebung des Sensorsystems emittiert wird und reflektierte Anteile der emittierten Strahlung detektiert werden und die erste und die zweite Punktwolke jeweils eine Vielzahl von Punkten enthalten, die jeweils durch eine räumliche Position und einen Energiekennwert beschrieben werden. Außerdem betrifft die Erfindung ein Verfahren zur automatischen Objekterkennung, ein Verfahren zum wenigstens teilweise automatischen Führen eines Kraftfahrzeugs, ein aktives Sensorsystem, ein elektronisches Fahrzeugführungssystem sowie ein Computerprogrammprodukt.

Aktive Sensorsysteme weisen eine Sendeeinheit zum Aussenden von elektromagnetischen Signalen sowie wenigstens einen Detektor zum Erfassen reflektierter Anteile der elektromagnetischen Strahlung auf. Basierend auf den reflektierten und detektierten Anteilen erzeugt der Detektor entsprechende Sensorsignale. Beispiele für aktive Sensorsysteme stellen Lidarsysteme und Radarsysteme dar.

Bei der Propagation eines Strahls der elektromagnetischen Strahlung durch die Umgebung wird im Allgemeinen ein geringer Teil der Leistung der elektromagnetischen Strahlung absorbiert, was zu Fluktuationen im Brechungsindex und in der Konsequenz zu Störungen des Strahls führen kann. Dieser Effekt, der auch als Ausblühen oder Blooming bezeichnet wird, ist besonders bei stark reflektierenden Objekten und entsprechend hohen reflektierten Strahlungsleistungen zu beobachten. Dieser Effekt kann letztlich dazu führen, dass die mittels des aktiven Sensorsystems detektierten Objekte größer erscheinen, als sie tatsächlich sind.

Im Dokument US 10,593,029 B2 wird ein Verfahren zur Reduktion von Pixelblooming beschrieben. Dazu wird zunächst ein Bild der Umgebung aufgenommen, ohne die Umgebung zu beleuchten. Dieses Bild wird von einem weiteren Bild abgezogen, das aufgenommen wird, während die Umgebung mit infrarotem Licht beleuchtet wird. In dem Subtraktionsbild werden gesättigte Bereiche identifiziert und entfernt, um Effekte des Blooming zu reduzieren.

Ein Nachteil solcher Verfahren ist, dass vor allem im Falle hochreflektiver Objekte nicht eindeutig zwischen Artefakten, die auf Blooming-Effekte zurückgehen, und tatsächlichen Objekten beziehungsweise Teilen davon unterschieden werden kann. Dies hat zur Folge, dass Blooming-Artefakte entweder nicht zuverlässig identifiziert werden oder tatsächliche Objekte fälschlicherweise als Blooming-Artefakte behandelt werden. Ein Sensorsystem zur Erkennung von stark reflektierenden Objekten ist aus US 9 080 866 B1 bekannt.

Vor diesem Hintergrund ist es eine Aufgabe der vorliegenden Erfindung, ein verbessertes Konzept für ein aktives Sensorsystem anzugeben, durch das Artefakte aufgrund von Blooming-Effekten zuverlässig identifiziert werden können und gleichzeitig das Risiko für die falsch-positive Identifikation von Artefakten reduziert wird.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, die räumliche Ausdehnung von Bereichen, die potentiell Artefakten aufgrund von Blooming-Effekten entsprechen, für mehrere Messzeiträume miteinander zu vergleichen und abhängig von einem Ergebnis des Vergleichs Artefakte zu identifizieren.

Gemäß dem verbesserten Konzept wird ein Verfahren zum Betreiben eines aktiven Sensorsystems angegeben, wobei mittels des Sensorsystems zum Erzeugen einer ersten Punktwolke während eines ersten Messzeitraums und zum Erzeugen einer zweiten Punktwolke während eines zweiten Messzeitraums, der insbesondere nach dem ersten Messzeitraum liegt, jeweils elektromagnetische Strahlung in eine Umgebung des Sensorsystems emittiert wird und jeweilige reflektierte Anteile der emittierten Strahlung detektiert werden. Die erste Punktwolke und die zweite Punktwolke beinhalten jeweils eine Vielzahl von Punkten, die jeweils durch eine räumliche Position und einen Energiekennwert beschrieben werden. Mittels einer Recheneinheit des Sensorsystems werden eine erste Untermenge der ersten Punktwolke und eine zweite Untermenge der zweiten Punktwolke identifiziert, wobei der jeweilige Energiekennwert jedes Punkts der ersten Untermenge und jedes Punkts der zweiten Untermenge größer oder gleich einem vorgegebenen ersten Energiegrenzwert ist. Mittels der Recheneinheit wird eine dritte Untermenge der ersten Punktwolke identifiziert sowie eine vierte Untermenge der zweiten Punktwolke, wobei die jeweilige Position jedes Punkts der dritten Untermenge innerhalb einer vordefinierten räumlichen Umgebung der Punkte der ersten Untermenge liegt und die jeweilige Position jedes Punkts der vierten Untermenge innerhalb einer vordefinierten räumlichen Umgebung der Punkte der zweiten Untermenge liegt. Mittels der Recheneinheit wird eine räumliche Ausdehnung der vierten Untermenge mit einer räumlichen Ausdehnung der dritten Untermenge verglichen und die Punkte der dritten Untermenge und/oder die Punkte der vierten Untermenge werden abhängig von einem Ergebnis des Vergleichs als Artefakte markiert.

Die elektromagnetischen Wellen können dabei beispielsweise als Funkwellen ausgesendet werden, insbesondere wenn das Sensorsystem als Radarsystem ausgestaltet ist, oder als Licht, beispielsweise als infrarotes Licht, insbesondere wenn das aktive Sensorsystem als Lidarsystem ausgestaltet ist.

Zum Erzeugen einer Punktwolke emittiert das aktive Sensorsystem, insbesondere eine Sendeeinheit des aktiven Sensorsystems, die elektromagnetische Strahlung in die Umgebung des Sensorsystems, wo sie wenigstens zum Teil von einem oder mehreren Objekten in der Umgebung reflektiert wird. Die reflektierten Anteile werden mittels des Sensorsystems, insbesondere mittels einer Detektoreinheit des Sensorsystems, detektiert und basierend auf den detektierten Anteilen werden entsprechend eines oder mehrere Detektorsignale erzeugt. Die Recheneinheit erzeugt basierend auf den Detektorsignalen die Punkte der Punktwolke. Dabei kann die Recheneinheit zum Bestimmen der jeweiligen räumlichen Position der Punkte insbesondere dreidimensionale Koordinaten der jeweiligen Punkte bestimmen. Beispielsweise kann der radiale Abstand des jeweiligen Punkts von dem Sensorsystem basierend auf einer Signallaufzeitmessung, auch als Time-of-Flight-Messung bezeichnet, durchgeführt werden. Ferner bestimmt die Recheneinheit basierend auf den Detektorsignalen die jeweiligen Energiekennwerte, welche eine Energie der reflektierten und detektierten Anteile, die zu dem jeweiligen Detektorsignal führen, quantifizieren.

Abgesehen von der radialen Entfernung können die Koordinaten der jeweiligen Punkte durch eine Position des jeweiligen Detektors in einem Detektorarray der Detektoreinheit bestimmt werden, wie beispielsweise bei einem Flash-Lidarsystem, und/oder basierend auf einer Position einer Umlenkeinheit, welche die reflektierten Anteile der elektromagnetischen Strahlung auf die Detektoreinheit lenkt, in Kombination mit der Position des Detektors bezüglich der Umlenkeinheit, wie beispielsweise bei einem Laserscanner.

Die räumliche Umgebung der Punkte der ersten Punktwolke beziehungsweise der zweiten Punktwolke kann je nach verwendetem Koordinatensystem beziehungsweise je nach eingesetzter Technologie des Sensorsystems unterschiedlich definiert sein. Ist eine räumliche Position eines Punkts beispielsweise durch eine zweidimensionale Position auf einem Pixelarray und einen radialen Abstand definiert, so kann die räumliche Umgebung durch einen entsprechenden radialen Abstandsbereich und einen entsprechenden an die jeweilige Untermenge angrenzenden zweidimensionalen Bereich auf dem Pixelarray gegeben sein. Sind die räumlichen Positionen der Punkte, wie beispielsweise bei Laserscannern, durch die einen radialen Abstand und zwei Winkel definiert, so können die Umgebungen durch einen radialen Abstandsbereich und entsprechende Winkelbereiche gegeben sein.

Da die Punkte der ersten und der zweiten Untermenge Energiekennwerte aufweisen, die größer sind als der vorgegebene erste Energiegrenzwert, können die Punkte der ersten und der zweiten Untermenge einem Objekt in der Umgebung des Sensorsystems mit hoher Reflektivität zugeordnet werden. Die Wahrscheinlichkeit, dass Blooming-Effekte dadurch erzeugt werden, ist daher potentiell erhöht. Die Punkte der dritten und der vierten Untermenge befinden sich räumlich benachbart zu dem Objekt mit hoher Reflektivität und kommen daher als potentielle Artefakte infrage.

Bewegt sich nun das Sensorsystem während oder zwischen den Messzeiträumen relativ zu dem Objekt, so ändert sich die tatsächliche Ausdehnung des Objekts nicht, sodass die Ausdehnung der ersten und der zweiten Untermenge im Wesentlichen konstant bleiben sollte. Für Blooming-Artefakte ist dies jedoch nicht der Fall. Hier verändert sich die Ausdehnung der Artefakte mit dem Abstand des Sensorsystems von dem Objekt hoher Reflektivität, insbesondere wächst die räumliche Ausdehnung der entsprechenden Bereiche mit kleiner werdendem Abstand.

In analoger Weise verhält es sich, wenn erfindungsgemäß die Sensitivität des Sensorsystems während des ersten Messzeitraums von der Sensitivität des Sensorsystems während des zweiten Messzeitraums unterscheidet. Auch dann bleibt die Ausdehnung der ersten und der zweiten Untermenge im Wesentlichen konstant, wohingegen sich die Ausdehnung der Bereiche, die Blooming-Artefakten entsprechen, verändert.

Die räumliche Ausdehnung der dritten und der vierten Untermenge kann dabei als jeweiliger Raumbereich verstanden werden, der von den entsprechenden Punkten eingenommen wird, wobei der Raumbereich eindimensional, zweidimensional oder dreidimensional sein kann.

Der erste und der zweite Messzeitraum folgen nicht notwendigerweise unmittelbar aufeinander, sodass zwischen dem ersten und dem zweiten Messzeitraum ein weiterer Zeitraum liegen kann. Der erste und der zweite Messzeitraum können in verschiedenen Ausführungsformen jedoch auch unmittelbar aufeinanderfolgen.

Durch den Vergleich der räumlichen Ausdehnung der vierten Untermenge mit der räumlichen Ausdehnung der dritten Untermenge lässt sich also abschätzen, ob sich die scheinbare Ausdehnung der entsprechenden Bereiche verändert, was darauf hinweist, dass es sich mit hoher Wahrscheinlichkeit um Blooming-Artefakte handelt. Ist die Ausdehnung der vierten Untermenge dagegen im Wesentlichen gleich der Ausdehnung der dritten Untermenge, so handelt es sich mit hoher Wahrscheinlichkeit nicht um Artefakte, sondern um tatsächliche Objekte.

Indem die Punkte der dritten beziehungsweise der vierten Untermenge abhängig von dem Ergebnis des Vergleichs als Artefakte markiert werden, wird die Qualität der entsprechenden Punktwolken für deren weitere Verwendung erhöht. Das Markieren als Artefakte beziehungsweise das Verfahren nach dem verbesserten Konzept kann daher als Filterung der Punktwolken angesehen werden. Je nachdem, ob die Punkte der dritten oder vierten Untermenge als Artefakte markiert werden oder nicht, können diese Punkte bei darauffolgenden Verarbeitungsschritten berücksichtigt werden oder nicht berücksichtigt werden beziehungsweise mit einem entsprechenden reduzierten Konfidenzwert berücksichtigt werden. So kann beispielsweise im Rahmen der Objekterkennung auf Punkte verzichtet werden, die als Artefakte markiert werden, sodass die Objekterkennung zuverlässiger erfolgen kann. In der Konsequenz können basierend auf der Objekterkennung zuverlässigere elektronische Kartenmaterialien erstellt werden und/oder Kraftfahrzeuge können basierend auf den Punktwolken mit höherer Zuverlässigkeit oder Sicherheit automatisch oder teilweise automatisch geführt werden.

Gemäß zumindest einer Ausführungsform wird das Sensorsystem zwischen dem ersten Messzeitraum und dem zweiten Messzeitraum und/oder während des ersten Messzeitraums und/oder während des zweiten Messzeitraums bewegt, sodass ein Abstand des Sensorsystems zu einem Objekt in der Umgebung, welches durch die erste Untermenge und durch die zweite Untermenge dargestellt wird, verändert wird.

Wie oben ausgeführt, kann dadurch erreicht werden, dass sich die räumliche Ausdehnung von Punkten, die Artefakten aufgrund von Blooming entsprechen, verändert, sodass ein entsprechender Unterschied zwischen der räumlichen Ausdehnung der dritten und der vierten Untermenge erkennbar wird.

Insbesondere kann das Sensorsystem an einem Kraftfahrzeug montiert sein, welches sich mit dem Sensorsystem bewegt.

Erfindungsgemäß wird mittels der Recheneinheit eine erste Sensitivität des Sensorsystems eingestellt, um die erste Punktwolke während des ersten Messzeitraums zu erzeugen und eine zweite Sensitivität des Sensorsystems eingestellt, um die zweite Punktwolke während des zweiten Messzeitraums zu erzeugen. Die erste Sensitivität ist dabei verschieden von der zweiten Sensitivität.

Insbesondere wird also zunächst die erste Sensitivität eingestellt und dann die erste Punktwolke mit der eingestellten ersten Sensitivität erzeugt. Danach wird die zweite Sensitivität eingestellt und dann die zweite Punktwolke mit der eingestellten zweiten Sensitivität erzeugt.

Die Sensitivität des Sensorsystems entspricht insbesondere einer Sensitivität der Detektoreinheit. Beispielsweise kann die Detektoreinheit einen oder mehrere optische Detektoren aufweisen, wie zum Beispiel Fotodioden, insbesondere Lawinenfotodioden, die auch als Avalanche-Fotodioden bezeichnet werden. Die Sensitivität ist dann beispielsweise durch eine Betriebsspannung der optischen Detektoren festgelegt, beispielsweise durch eine Sperrspannung, mit der die Fotodioden oder Lawinenfotodioden betrieben werden.

Wie oben ausgeführt, kann auch dadurch erreicht werden, dass sich die räumliche Ausdehnung von Punkten, die Artefakten aufgrund von Blooming entsprechen, verändert, sodass ein entsprechender Unterschied zwischen der räumlichen Ausdehnung der dritten und der vierten Untermenge erkennbar wird.

Die Veränderung der Sensitivität kann dabei an die Stelle der Bewegung des Sensorsystems zwischen den Messzeiträumen treten oder mit dieser kombiniert werden, um einen noch deutlicheren Effekt zu erhalten und dadurch die Artefakte noch zuverlässiger erkennen zu können.

Gemäß zumindest einer Ausführungsform werden nur Punkte der ersten Punktwolke als Teil der dritten Untermenge identifiziert, deren Energiekennwert kleiner oder gleich einem vorgegebenen zweiten Energiegrenzwert ist, wobei der zweite Energiegrenzwert kleiner ist als der erste Energiegrenzwert.

Gemäß zumindest einer Ausführungsform werden nur Punkte der zweiten Punktwolke als Teil der vierten Untermenge identifiziert, deren Energiekennwert kleiner oder gleich dem zweiten Energiegrenzwert ist.

Mit anderen Worten werden auch nur solche Punkte als Artefakte markiert, deren Energiekennwert kleiner oder gleich dem zweiten Energiegrenzwert ist. Dadurch wird dem Umstand Rechnung getragen, dass die Energie reflektierter Anteile der elektromagnetischen Strahlung, die zu Artefakten aufgrund von Blooming führen, in der Regel signifikant kleiner ist als die Energie, die von den benachbarten hochreflektiven und das Blooming letztlich verursachenden Objekten reflektiert wird. Durch die Begrenzung anhand des zweiten Energiegrenzwerts kann daher das Risiko für die falsch-positive Detektion von Artefakten weiter reduziert werden.

Beispielsweise kann der zweite Energiegrenzwert kleiner oder gleich 50 % des ersten Energiegrenzwerts sein, beispielsweise kleiner oder gleich 30 % oder kleiner oder gleich 20 % des ersten Energiegrenzwerts.

Durch Modifikation des zweiten Energiegrenzwerts kann auch, je nach den konkreten Erfordernissen bei der weiteren Verwendung der Punktwolken, eine Abwägung zwischen den jeweiligen Risiken für falsch-negative und falsch-positive Detektion von Artefakten vorgenommen werden.

Gemäß zumindest einer Ausführungsform werden die Punkte der dritten Untermenge und/oder die Punkte der vierten Untermenge nur dann als Artefakte markiert, wenn sich die räumliche Ausdehnung der vierten Untermenge von der räumlichen Ausdehnung der dritten Untermenge wenigstens um einen vorgegebenen Schwellwert unterscheidet.

Dadurch kann das Risiko für falsch-positive Erkennung von Artefakten weiter reduziert werden. In einer konkreten Ausgestaltung kann der Betrag des Schwellwerts auch davon abhängen, wie lange die Messzeiträume jeweils dauern beziehungsweise wie viel Zeit zwischen dem ersten und dem zweiten Messzeitraum verstreicht.

Gemäß zumindest einer Ausführungsform wird mittels des Sensorsystems wenigstens eine weitere Punktwolke während wenigstens eines entsprechenden weiteren Messzeitraums nach dem ersten Messzeitraum erzeugt, wobei Punkte der wenigstens einen weiteren Punktwolke jeweils durch eine räumliche Position und einen Energiekennwert beschrieben werden. Für jede der wenigstens einen weiteren Punktwolke wird mittels der Recheneinheit eine fünfte Untermenge identifiziert, wobei der jeweilige Energiekennwert jedes Punktes der fünften Untermenge größer oder gleich dem ersten Energiegrenzwert ist. Für jede der wenigstens einen weiteren Punktwolke wird außerdem eine sechste Untermenge identifiziert, wobei die jeweilige Position jedes Punkts der sechsten Untermenge innerhalb einer vordefinierten räumlichen Umgebung der Punkte der fünften Untermenge der jeweiligen weiteren Punktwolke liegt. Für jede der wenigstens einen weiteren Punktwolke werden die Punkte der vierten Punktwolke abhängig von einer räumlichen Ausdehnung der sechsten Untermenge als Artefakte markiert.

Der wenigstens eine weitere Messzeitraum liegt beispielsweise zwischen dem ersten Messzeitraum und dem zweiten Messzeitraum. Indem die räumliche Ausdehnung der dritten Untermenge, der sechsten Untermengen und der vierten Untermengen miteinander verglichen werden, kann bestimmt werden, ob sich der von den potentiell Artefakten entsprechenden Punkten in Anspruch genommene Raum stetig vergrößert oder verkleinert, wenn der Abstand des Sensorsystems von dem entsprechenden Objekt stetig verkleinert beziehungsweise vergrößert wird. Insbesondere kann aus dem zeitlichen Verlauf der räumlichen Ausdehnung der dritten Untermenge, der sechsten Untermengen und der vierten Untermengen eine genauere Einschätzung erfolgen, sodass die Erkennung der Artefakte mit höherer Zuverlässigkeit und/oder mit geringerem Risiko für die falsch-positive Detektion von Artefakten durchgeführt werden kann.

Gemäß zumindest einer Ausführungsform wird die räumliche Position der Punkte der jeweiligen Punktwolken abhängig von einer jeweiligen radialen Entfernung von dem Sensorsystem bestimmt. Nur Punkte der ersten Punktwolke werden als Teil der dritten Untermenge identifiziert, deren radiale Entfernung in einer vorgegebenen radialen Umgebung der ersten Untermenge liegt und/oder nur Punkte der zweiten Punktwolke werden als Teil der vierten Untermenge identifiziert, deren radiale Entfernung in einer vorgegebenen radialen Umgebung der zweiten Untermenge liegt.

Dadurch wird dem Umstand Rechnung getragen, dass die Punkte, die Artefakten aufgrund von Blooming-Effekten entsprechen, zu Scheinobjekten gehören, die in einem Abstand von dem Sensorsystem zu liegen scheinen, der wenigstens näherungsweise dem Abstand des tatsächlichen hochreflektiven Objekts entspricht. Durch Berücksichtigung des radialen Umgebungsbereichs kann das Risiko für die falsch-positive Detektion von Artefakten weiter reduziert werden.

Gemäß zumindest einer Ausführungsform wird die räumliche Position der Punkte der jeweiligen Punktwolken abhängig von einem horizontalen oder azimutalen Einfallswinkel der entsprechenden reflektierenden Anteile bestimmt. Nur Punkte der ersten Punktwolke werden als Teil der dritten Untermenge identifiziert, deren horizontaler Einfallswinkel in einer vorgegebenen horizontalen Winkelumgebung der ersten Untermenge liegt beziehungsweise der Punkte der ersten Untermenge liegt und/oder nur Punkte der zweiten Punktwolke werden als Teil der vierten Untermenge identifiziert, deren horizontaler Einfallswinkel in einer vorgegebenen horizontalen Winkelumgebung der zweiten Untermenge beziehungsweise der Punkte der zweiten Untermenge liegt.

Solche Ausführungsformen sind besonders relevant, wenn es sich bei dem aktiven Sensorsystem um ein scannendes Sensorsystem handelt, beispielsweise um ein Lidarsystem in der Ausgestaltung als Laserscanner. In solchen Systemen sind Umlenkeinheiten vorgesehen, beispielsweise Umlenkspiegel, die drehbar oder schwenkbar gelagert sind, sodass zu bestimmten Zeiten nur reflektierte Anteile der elektromagnetischen Strahlung aus bestimmten horizontalen Einfallswinkeln auf die Detektoreinheit gelenkt werden können. So kann in Richtung der Horizontalen eine Ortsauflösung realisiert werden.

Da für Artefakte aufgrund von Blooming-Effekten in erster Linie Bereiche infrage kommen, die in unmittelbarer Umgebung des Objekts mit hoher Reflektivität liegen, wird durch die Begrenzung der horizontalen Winkelumgebung das Risiko für die falsch-positive Detektion von Artefakten weiter reduziert.

Gemäß zumindest einer Ausführungsform wird die räumliche Position abhängig von einem vertikalen Einfallswinkel oder Polarwinkel der entsprechenden reflektierten Anteile bestimmt. Nur Punkte der ersten Punktwolke werden als Teil der dritten Untermenge identifiziert, deren vertikaler Einfallswinkel in einer vorgegebenen vertikalen Winkelumgebung der ersten Untermenge liegt und/oder nur Punkte der zweiten Punktwolke werden als Teil der vierten Untermenge identifiziert, deren vertikaler Einfallswinkel in einer vorgegebenen vertikalen Winkelumgebung der zweiten Untermenge liegt.

Der vertikale Einfallswinkel kann ebenfalls durch eine schwenkbare oder drehbare Umlenkeinheit definiert werden, wie für den horizontalen Einfallswinkel beschrieben. Alternativ können mehrere Detektoren in Richtung der Vertikalrichtung nebeneinander angeordnet sein, sodass reflektierte Anteile der elektromagnetischen Strahlung aus unterschiedlichen vertikalen Winkelbereichen von unterschiedlichen Detektoren detektiert werden. Auch so kann eine vertikale Auflösung erzielt werden. In diesem Fall spricht man bei Punkten, die alle von demselben Detektor erfasst werden, auch von einer Lage. Die vertikale Winkelumgebung der zweiten Untermenge kann beispielsweise durch eine Lage definiert sein, sodass nur Punkte der ersten Punktwolke als Teil der dritten Untermenge identifiziert werden, die zu derselben Lage gehören wie die Punkte der ersten Untermenge. In weiteren Ausführungsformen kann die vertikale Winkelumgebung beispielsweise durch zwei oder mehr aufeinanderfolgende Lagen definiert sein. Analoges gilt für die Punkte der vierten Untermenge der zweiten Punktwolke.

Gemäß dem verbesserten Konzept wird auch ein Verfahren zur automatischen Objekterkennung angegeben. Dazu wird ein Verfahren zum Betreiben eines aktiven optischen Sensorsystems nach dem verbesserten Konzept durchgeführt, ein aktives Sensorsystem wird also gemäß einem Verfahren nach dem verbesserten Konzept betrieben. Mittels der Recheneinheit wird die Objekterkennung abhängig von der zweiten Punktwolke durchgeführt und/oder abhängig von der ersten Punktwolke durchgeführt, wobei die Punkte der dritten Untermenge nur dann bei der Objekterkennung berücksichtigt werden, wenn sie nicht als Artefakte markiert sind und/oder die Punkte der vierten Untermenge nur dann bei der Objekterkennung berücksichtigt werden, wenn sie nicht als Artefakte markiert sind.

Mit anderen Worten werden die Punkte der dritten oder der vierten Untermenge nicht bei der Objekterkennung berücksichtigt, wenn und soweit sie jeweils als Artefakte markiert sind.

Zur Objekterkennung selbst kann die Recheneinheit bekannte Algorithmen zur Verarbeitung von Punktwolken durchführen. Insbesondere kann die Recheneinheit basierend auf der ersten und/oder zweiten Punktwolke eine Position und/oder Ausdehnung und/oder Art des Objekts bestimmen. Die Objekterkennung kann auch eine Objektklassifizierung, das Bestimmen einer Bounding-Box für das Objekt und/oder eine Objektverfolgung beinhalten.

Gemäß dem verbesserten Konzept wird auch ein Verfahren zum wenigstens teilweise automatischen Führen eines Kraftfahrzeugs angegeben. Dazu wird ein Verfahren zur automatischen Objekterkennung nach dem verbesserten Konzept durchgeführt und das Kraftfahrzeug wird, insbesondere mittels eines elektronischen Fahrzeugführungssystems des Kraftfahrzeugs, abhängig von einem Ergebnis der Objekterkennung wenigstens teilweise automatisch geführt.

Unter einem elektronischen Fahrzeugführungssystem kann hier und im Folgenden ein elektronisches System verstanden werden, das dazu eingerichtet ist, das Kraftfahrzeug vollautomatisch oder vollautonom zu führen oder zu steuern, insbesondere ohne dass ein Eingriff in eine Steuerung durch einen Fahrer erforderlich ist. Das Kraftfahrzeug beziehungsweise das elektronische Fahrzeugführungssystem führt dabei alle erforderlichen Funktionen, wie gegebenenfalls erforderliche Lenk-, Brems- und/oder Beschleunigungsmanöver, die Beobachtung und Erfassung des Straßenverkehrs sowie die damit verbundenen erforderlichen Reaktionen selbsttätig und vollautomatisch durch. Insbesondere kann das elektronische Fahrzeugführungssystem zur Implementierung eines vollautomatischen oder vollautonomen Fahrmodus des Kraftfahrzeugs nach Stufe 5 der Klassifizierung gemäß SAE J3016 dienen. Unter einem elektronischen Fahrzeugführungssystem kann auch ein Fahrerassistenzsystem (englisch: "advanced driver assistance system", ADAS) verstanden werden, welches den Fahrer bei einer teilweise automatisierten oder teilautonomen Fahrt des Kraftfahrzeugs unterstützt. Insbesondere kann das elektronische Fahrzeugführungssystem zur Implementierung eines teilweise automatisierten oder teilautonomen Fahrmodus des Kraftfahrzeugs nach einer der Stufen 1 bis 4 gemäß der SAE J3016-Klassifizierung dienen. Hier und im Folgenden bezieht sich "SAE J3016" auf die entsprechende Norm in der Version vom Juni 2018.

Die wenigstens teilweise automatische Fahrzeugführung kann es daher beinhalten, das Kraftfahrzeug gemäß eines vollautomatischen oder vollautonomen Fahrmodus der Stufe 5 nach SAE J3016 zu führen. Die wenigstens teilweise automatische Fahrzeugführung kann auch beinhalten, das Kraftfahrzeug gemäß eines teilweise automatisierten oder teilautonomen Fahrmodus nach einer der Stufen 1 bis 4 nach SAE J3016 zu führen.

Gemäß dem verbesserten Konzept wird auch ein aktives Sensorsystem angegeben, das eine Emittereinheit aufweist, die dazu eingerichtet ist, während eines ersten Messzeitraums und während eines zweiten Messzeitraums jeweils elektromagnetische Strahlung in eine Umgebung des Sensorsystems zu emittieren. Das Sensorsystem weist eine Detektoreinheit auf, die dazu eingerichtet ist, insbesondere angesteuert durch eine Steuereinheit des Sensorsystems, während des ersten Messzeitraums erste reflektierte Anteile der während des ersten Messzeitraums emittierten elektromagnetischen Strahlung zu detektieren und basierend darauf wenigstens ein erstes Detektorsignal zu erzeugen. Die Detektoreinheit ist dazu eingerichtet, während des zweiten Messzeitraums zweite reflektierte Anteile der während des zweiten Messzeitraums emittierten elektromagnetischen Strahlung zu detektieren und basierend darauf wenigstens ein zweites Detektorsignal zu erzeugen.

Das Sensorsystem weist eine Recheneinheit auf, die dazu eingerichtet ist, basierend auf dem wenigstens einen ersten Detektorsignal eine erste Punktwolke zu erzeugen und basierend auf dem wenigstens einen zweiten Detektorsignal eine zweite Punktwolke zu erzeugen, wobei die erste und die zweite Punktwolke jeweils eine Vielzahl von Punkten enthalten, die jeweils durch eine räumliche Position und einen Energiekennwert beschrieben sind. Die Recheneinheit ist dazu eingerichtet, eine erste Untermenge der ersten Punktwolke zu identifizieren und eine zweite Untermenge der zweiten Punktwolke zu identifizieren, wobei der jeweilige Energiekennwert jedes Punkts der ersten Untermenge und der jeweilige Energiekennwert jedes Punkts der zweiten Untermenge größer oder gleich einem vorgegebenen ersten Energiegrenzwert sind. Die Recheneinheit ist dazu eingerichtet, eine dritte Untermenge der ersten Punktwolke und eine vierte Untermenge der zweiten Punktwolke zu identifizieren, wobei die jeweilige Position jedes Punktes der dritten Untermenge innerhalb einer vordefinierten räumlichen Umgebung der Punkte der ersten Untermenge liegt und die jeweilige Position jedes Punktes der vierten Untermenge innerhalb einer vordefinierten räumlichen Umgebung der Punkte der zweiten Untermenge liegt. Die Recheneinheit ist dazu eingerichtet, eine räumliche Ausdehnung der vierten Untermenge mit einer räumlichen Ausdehnung der dritten Untermenge zu vergleichen und die Punkte der dritten Untermenge und/oder der vierten Untermenge abhängig von einem Ergebnis des Vergleichs als Artefakte zu markieren.

Gemäß zumindest einer Ausführungsform des aktiven Sensorsystems nach dem verbesserten Konzept ist das Sensorsystem als Radar-Sensorsystem ausgestaltet oder als Lidarsensorsystem, insbesondere als Laserscanner oder als Flash-Lidarsensorsystem.

Gemäß zumindest einer Ausführungsform ist das Sensorsystem als Laserscanner ausgestaltet und beinhaltet eine Umlenkeinheit, die dazu eingerichtet ist, die emittierte Strahlung umzulenken, um einen horizontalen Aussendewinkel der emittierten Strahlung festzulegen und die reflektierten Anteile umzulenken, um einen horizontalen Einfallswinkel der reflektierten Anteile festzulegen.

Gemäß zumindest einer Ausführungsform ist die Recheneinheit dazu eingerichtet, für jeden Punkt der ersten Punktwolke den Energiekennwert abhängig von einer Pulsweite eines Signalpulses des wenigstens einen Detektorsignals zu bestimmen und/oder die Recheneinheit ist dazu eingerichtet, für jeden Punkt der zweiten Punktwolke den Energiekennwert abhängig von einer Pulsweite eines Signalpulses des wenigstens einen zweiten Detektorsignals zu bestimmen.

Im Kontext von Laserscannern werden diese Pulsweiten mitunter auch als Echopulsweiten bezeichnet.

Weitere Ausführungsformen des aktiven Sensorsystems nach dem verbesserten Konzept folgen unmittelbar aus den verschiedenen Ausgestaltungsformen des Verfahrens zum Betreiben eines aktiven Sensorsystems nach dem verbesserten Konzept, des Verfahrens zur automatischen Objekterkennung nach dem verbesserten Konzept und des Verfahrens zum wenigstens teilweise automatischen Führen eines Kraftfahrzeugs nach dem verbesserten Konzept und jeweils umgekehrt. Insbesondere kann ein aktives Sensorsystem nach dem verbesserten Konzept dazu eingerichtet sein, ein Verfahren nach dem verbesserten Konzept durchzuführen oder es führt ein solches Verfahren durch.

Gemäß dem verbesserten Konzept wird auch ein elektronisches Fahrzeugführungssystem angegeben, das ein aktives Sensorsystem nach dem verbesserten Konzept aufweist.

Gemäß dem verbesserten Konzept wird ein Computerprogramm mit Befehlen angegeben, wobei die Befehle bei Ausführung des Computerprogramms beziehungsweise der Befehle durch ein aktives Sensorsystem nach dem verbesserten Konzept das aktive Sensorsystem dazu veranlassen, ein Verfahren zum Betreiben eines aktiven Sensorsystems nach dem verbesserten Konzept durchzuführen.

Gemäß dem verbesserten Konzept wird auch ein weiteres Computerprogramm mit weiteren Befehlen angegeben, wobei die weiteren Befehle bei Ausführung der weiteren Befehle beziehungsweise des weiteren Computerprogramms durch ein elektronisches Fahrzeugführungssystem nach dem verbesserten Konzept das Fahrzeugführungssystem dazu veranlassen, ein Verfahren zum wenigstens teilweise automatischen Führen eines Kraftfahrzeugs nach dem verbesserten Konzept durchzuführen.

Gemäß dem verbesserten Konzept wird auch ein computerlesbares Speichermedium angegeben, das ein Computerprogramm und/oder ein weiteres Computerprogramm nach dem verbesserten Konzept speichert.

Das Computerprogramm, das weitere Computerprogramm sowie das computerlesbare Speichermedium können als jeweilige Computerprogrammprodukte mit den Befehlen beziehungsweise den weiteren Befehlen bezeichnet werden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen können nicht nur in der jeweils angegebenen Kombination, sondern auch in anderen Kombinationen von dem verbesserten Konzept umfasst sein. Es sind somit auch solche Ausführungen des verbesserten Konzepts umfasst und offenbart, die in den Figuren nicht explizit gezeigt und/oder erläutert sind, jedoch durch separierte Merkmalskombinationen aus den erläuterten Ausführungen hervorgehen und erzeugbar sind. Es sind somit insbesondere auch Ausführungen und Merkmalskombinationen umfasst und offenbart, die nicht alle Merkmale eines ursprünglich formulierten Anspruchs aufweisen. Es sind darüber hinaus Ausführungen und Merkmalskombinationen umfasst und offenbart, die über die in den Rückbezügen der Ansprüche dargelegten Merkmalskombinationen hinausgehen oder von denen abweichen.

In den Figuren zeigen:
- Fig. 1: eine schematische Darstellung eines Kraftfahrzeugs mit einer beispielhaften Ausführungsform eines elektronischen Fahrzeugführungssystems nach dem verbesserten Konzept;
- Fig. 2: ein Ablaufdiagramm einer beispielhaften Ausführungsform eines Verfahrens zur automatischen Objekterkennung nach dem verbesserten Konzept;
- Fig. 3: eine schematische Darstellung einer Lidar-Punktwolke; und
- Fig. 4: eine schematische Darstellung einer weiteren Lidar-Punktwolke.

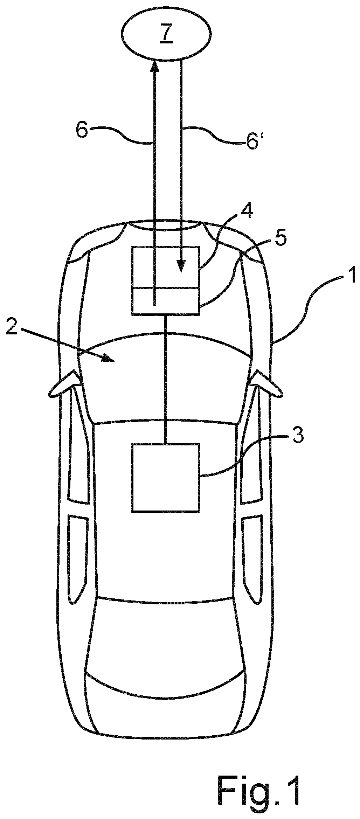

In Fig. 1 ist schematisch ein Kraftfahrzeug 1 dargestellt, das ein aktives Sensorsystem 2 gemäß dem verbesserten Konzept beinhaltet. Das Sensorsystem 2 ist beispielsweise als Lidarsystem ausgestaltet.

Das Sensorsystem 2 beinhaltet eine Recheneinheit 3, eine Emittereinheit 5 und eine Detektoreinheit 4, die jeweils mit der Recheneinheit 3 verbunden sind. Die Detektoreinheit 4 und die Emittereinheit 5 können beispielsweise durch die Recheneinheit 3 angesteuert werden, die dann auch die Aufgabe einer Steuereinheit übernehmen kann.

Die Emittereinheit 5 kann elektromagnetische Strahlung 6, beispielsweise infrarotes Licht, in eine Umgebung des Sensorsystems 2 emittieren, wo sie von einem Objekt 7 wenigstens teilweise reflektiert werden kann, so dass reflektierte Anteile 6' von der Detektoreinheit 4 detektiert werden können. Basierend auf den detektierten Anteilen 6' kann die Detektoreinheit 4 wenigstens ein Detektorsignal erzeugen und an die Recheneinheit 3 übermitteln.

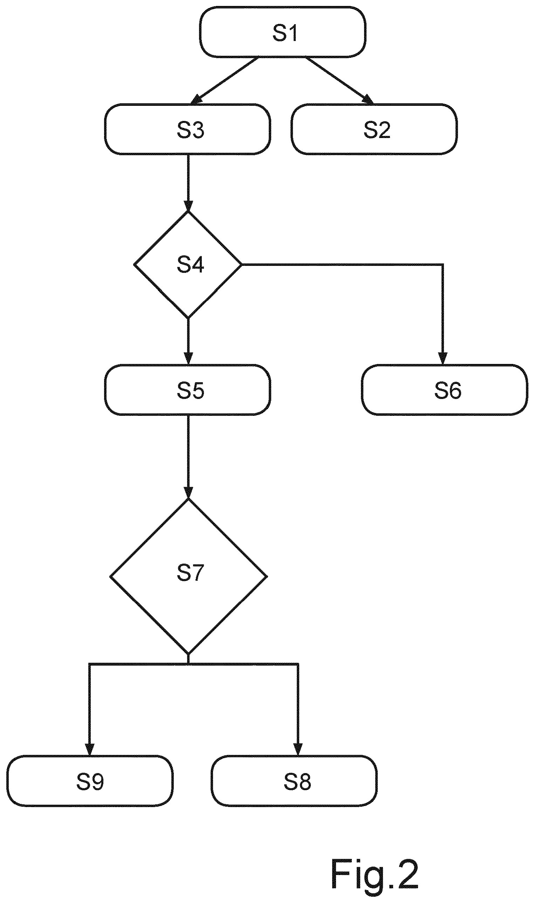

Die Funktionsweise des Sensorsystems 2 wird im Folgenden unter Bezugnahme auf beispielhafte Ausführungsformen eines Verfahrens zur automatischen Objekterkennung nach dem verbesserten Konzept, insbesondere bezüglich der Figuren Fig. 2 bis Fig. 4, genauer erläutert.

In Fig. 2 ist ein Ablaufdiagramm einer beispielhaften Ausführungsform eines Verfahrens zur automatischen Objekterkennung nach dem verbesserten Konzept dargestellt.

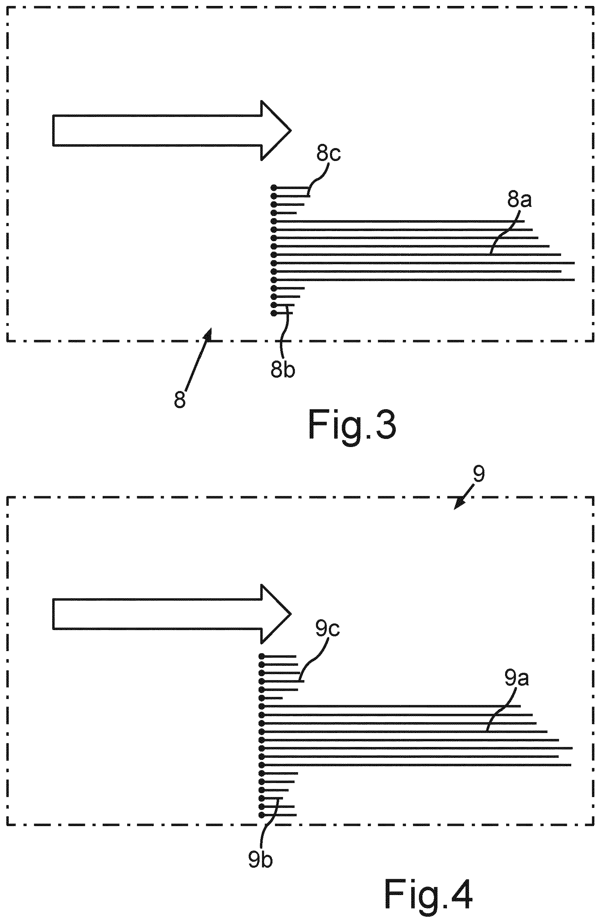

In Schritt S1 sendet die Emittereinheit 5 während eines ersten Messzeitraums die elektromagnetische Strahlung 6 in die Umgebung des Sensorsystems 2. Die Detektoreinheit 4 detektiert die entsprechenden reflektierten Anteile 6 und erzeugt basierend darauf wenigstens ein erstes Detektorsignal. Die Recheneinheit 3 erzeugt basierend auf dem wenigstens einen ersten Detektorsignal eine erste Punktwolke 8, wie sie schematisch in Fig. 3 dargestellt ist. Der nach rechts gerichtete Pfeil in Fig. 3 repräsentiert eine Bewegungsrichtung des Kraftfahrzeugs 1.

In der Darstellung der Fig. 3 sind die Punkte der ersten Punktwolke 8 als zweidimensionale Projektionen in die Fahrbahnebene dargestellt, wobei jedem Punkt eine gerade Linie zugeordnet ist, die einer Echopulsweite des entsprechenden Detektorsignals entspricht. Wie in Fig. 3 erkennbar ist, befindet sich in der Umgebung des Sensorsystems 2 ein Objekt mit relativ hoher Reflektivität, was zu hohen Werten der jeweiligen Energiekennwerte führt. Die entsprechenden Punkte der ersten Punktwolke 8 werden von der Recheneinheit 3 in Schritt S2 als Untermenge 8a identifiziert, wenn deren Energiekennwert größer oder gleich einem vorgegebenen ersten Energiegrenzwert ist.

Zudem sendet die Emittereinheit 5 in Schritt S1 während eines zweiten Messzeitraums, der nach dem ersten Messzeitraum liegt, erneut elektromagnetische Strahlung 6 in die Umgebung des Sensorsystems 2. Die Detektoreinheit 4 detektiert erneut die entsprechenden reflektierten Anteile 6 und erzeugt basierend darauf wenigstens ein zweites Detektorsignal. Die Recheneinheit 3 erzeugt basierend auf dem wenigstens einen zweiten Detektorsignal eine zweite Punktwolke 9, wie sie schematisch in Fig. 4 dargestellt ist.

In Schritt S2 werden die Punkte der zweiten Punktwolke 9 mit einem Energiekennwert größer oder gleich dem ersten Energiegrenzwert von der Recheneinheit 3 als Untermenge 9a identifiziert.

In Schritt S3 identifiziert die Recheneinheit 3 beispielsweise alle übrigen Punkte der Punktwolken 8, 9 als Punkte, die nicht zu einem hochreflektiven Objekt gehören.

Im Schritt S4 führt die Recheneinheit 3 eine Überprüfung aus, ob Punkte, die unmittelbar an die Untermenge 8a angrenzen als potentielle Artefakte in Frage kommen. Dazu werden diejenigen Punkte der ersten Punktwolke 8 identifiziert, die in einem vorgegebenen räumlichen Bereich um die Punkte der Untermenge 8a liegen und deren Energiekennwert kleiner oder gleich einem vorgegebenen zweiten Energiegrenzwert sind, der kleiner ist als der erste Energiegrenzwert. Es werden also Punkte identifiziert, die sich scheinbar in der Nähe des hochreflektiven Objekts befinden, aber auf weniger energiereiche Reflexionen zurückgehen. Solche Punkte werden als Untermengen 8b, 8c identifiziert. Eine analoge Überprüfung findet auch bezüglich der zweiten Punktwolke 9 statt, wobei entsprechende Untermengen 9b, 9c identifiziert werden.

Im Schritt S5 kann die Recheneinheit 3 beispielsweise alle Punkte der Untermengen 8b, 8c, 9b, 9c als potentielle Artefakte markieren, beispielsweise indem entsprechenden Flags gesetzt werden. Optional werden im Schritt S6 die übrigen Punkte der Punktwolken 8, 9 als Nicht-Artefakte markiert, beispielsweise mittels eines entsprechenden Flags.

In Schritt S7 vergleicht die Recheneinheit 3 die räumliche Ausdehnung der Punkte der Untermenge 8b mit der räumlichen Ausdehnung der Punkte der Untermenge 9b beziehungsweise die räumliche Ausdehnung der Punkte der Untermenge 8c mit der räumlichen Ausdehnung der Untermenge 9c. Für Artefakte, die auf Blooming-Effekte zurückgehen, vergrößern sich die entsprechenden räumlichen Bereiche, wenn sich der Abstand zwischen dem hochreflektiven Objekt und dem Sensorsystem 2 verringert. In Schritt S7 überprüft die Recheneinheit 3 daher beispielsweise, ob die räumliche Ausdehnung der Untermenge 9b wenigstens um einen Schwellwert größer ist als die räumliche Ausdehnung der Untermenge 8b beziehungsweise ob die räumliche Ausdehnung der Untermenge 9c wenigstens um den Schwellwert größer ist als die räumliche Ausdehnung der Untermenge 8c. Es kann beispielsweise ein Schwellwert gewählt werden, der einem Anstieg der räumlichen Ausdehnung der relevanten Punkte um mindestens 10 % oder mindestens 20 % alle 40 ms oder dergleichen entspricht.

Ist dies der Fall, so werden die jeweiligen Punkte der Untermengen 8b, 8c, 9b, 9c als Artefakte markiert, beispielsweise mittels eines entsprechenden Flags. Anderenfalls können die entsprechenden Punkte als Punkte identifiziert werden, die reale Objekte repräsentieren. Im Schritt S8 verwirft die Recheneinheit 3 beispielsweise alle Punkte, die als Artefakte markiert sind oder berücksichtigt diese Punkte nicht weiter, insbesondere für einen darauffolgenden Objekterkennungsalgorithmus.

Im Schritt S9 führt die Recheneinheit 3 basierend auf den Punkten, die nicht als Artefakte markiert sind, den Objekterkennungsalgorithmus durch.

Nach dem verbesserten Konzept kann es also, wie insbesondere hinsichtlich der Figuren beschrieben, erreicht werden, dass Artefakte aufgrund von Blooming-Effekten mit höherer Zuverlässigkeit identifiziert werden, ohne dass die Wahrscheinlichkeit für die falsch-positive Detektion von Artefakten erhöht wird beziehungsweise wobei die Wahrscheinlichkeit für die falsch-positive Detektion von Artefakten kann reduziert werden.

Gemäß dem verbesserten Konzept werden beispielsweise physikalische Beschränkungen definiert, die es erlauben, Artefakte aufgrund von Blooming-Effekten von Punkten, die tatsächliche Objekte repräsentieren, zu unterscheiden. In verschiedenen Ausgestaltungsformen werden dazu zunächst potentielle Artefakte in der Nähe von hochreflektierenden Objekten identifiziert. Diese potentiellen Artefaktpunkte können dann geclustert und dediziert behandelt werden. Um falsch-positive Artefakterkennung zu vermeiden, kann die räumliche Ausdehnung der Artefaktcluster über die Zeit beobachtet werden. Da eine Vergrößerung der räumlichen Ausdehnung für reale Objekte nicht plausibel ist, kann der entsprechende Cluster gegebenenfalls als Artefakt identifiziert werden.

In verschiedenen Ausgestaltungsformen werden daher zunächst Punkte, die hochreflektiven Objekten entsprechen, identifiziert und geclustert. Benachbarte Punkte, die beispielsweise in einem ähnlichen radialen Abstandsbereich liegen, werden identifiziert und geclustert, wobei in verschiedenen Ausgestaltungsformen eine Beschränkung des horizontalen und/oder vertikalen Einfallswinkels berücksichtigt werden kann. Es kann überprüft werden, ob die Energiekennwerte der benachbarten Punkte klein genug sind, um als Artefakte infrage zu kommen. Cluster, die diese Kriterien erfüllen, können über die Zeit überwacht werden, um festzustellen, ob die räumliche Ausdehnung im Laufe der Zeit eine definierte maximale Größenzunahme überschreitet. Ist dies der Fall, können diese Punkte als Artefakte behandelt werden und beispielsweise für Objekterkennungs- oder Objektverfolgungsalgorithmen nicht weiter verwendet werden.

## Patentansprüche

1. Verfahren zum Betreiben eines aktiven Sensorsystems (2), wobei mittels des Sensorsystems (2) zum Erzeugen einer ersten Punktwolke (8) während eines ersten Messzeitraums und zum Erzeugen einer zweiten Punktwolke (9) während eines zweiten Messzeitraums jeweils elektromagnetische Strahlung (6) in eine Umgebung des Sensorsystems (2) emittiert wird und reflektierte Anteile (6') der emittierten Strahlung (6) detektiert werden und die erste und die zweite Punktwolke (9) jeweils eine Vielzahl von Punkten enthalten, die jeweils durch eine räumliche Position und einen Energiekennwert beschrieben werden,
wobei mittels einer Recheneinheit (3) des Sensorsystems (2)
- eine erste Untermenge (8a) der ersten Punktwolke (8) und eine zweite Untermenge (9a) der zweiten Punktwolke (9) identifiziert werden, wobei der jeweilige Energiekennwert jedes Punktes der ersten Untermenge (8a) und der zweiten Untermenge (9a) größer oder gleich einem vorgegebenen ersten Energiegrenzwert ist;
- eine dritte Untermenge (8b, 8c) der ersten Punktwolke (8) und eine vierte Untermenge (9b, 9c) der zweiten Punktwolke (9) identifiziert werden, wobei die jeweilige Position jedes Punktes der dritten Untermenge (8b, 8c) innerhalb einer vordefinierten räumlichen Umgebung der Punkte der ersten Untermenge (8a) liegt und die jeweilige Position jedes Punktes der vierten Untermenge (9b, 9c) innerhalb einer vordefinierten räumlichen Umgebung der Punkte der zweiten Untermenge (9a) liegt;
- eine räumliche Ausdehnung der vierten Untermenge (9b, 9c) mit einer räumlichen Ausdehnung der dritten Untermenge (8b, 8c) verglichen wird, und die Punkte der dritten Untermenge (8b, 8c) und/oder der vierten Untermenge (9b, 9c) abhängig von einem Ergebnis des Vergleichs als Artefakte markiert werden,
**dadurch gekennzeichnet,**
**dass** eine erste Sensitivität des Sensorsystems (2) eingestellt wird, um die erste Punktwolke (8) während des ersten Messzeitraums zu erzeugen; und
eine zweite Sensitivität des Sensorsystems (2), die von der ersten Sensitivität verschieden ist, eingestellt wird, um die zweite Punktwolke (9) während des zweiten Messzeitraums zu erzeugen.

2. Verfahren nach Anspruch 1,
**dadurch gekennzeichnet, dass**
das Sensorsystem (2) zwischen dem ersten Messzeitraum und dem zweiten Messzeitraum und/oder während des ersten Messzeitraums und/oder während des zweiten Messzeitraums bewegt wird, sodass ein Abstand des Sensorsystems (2) zu einem Objekt (7) in der Umgebung, welches durch die erste Untermenge (8a) und die zweite Untermenge (9a) dargestellt wird, verändert wird.

3. Verfahren nach einem der vorhergehenden Ansprüche,
**dadurch gekennzeichnet, dass**
- nur Punkte der ersten Punktwolke (8) als Teil der dritten Untermenge (8b, 8c) identifiziert werden, deren Energiekennwert kleiner oder gleich einem vorgegebenen zweiten Energiegrenzwert ist, wobei der zweite Energiegrenzwert kleiner ist als der erste Energiegrenzwert; und/oder
- nur Punkte der zweiten Punktwolke (9) als Teil der vierten Untermenge (9b, 9c) identifiziert werden, deren Energiekennwert kleiner oder gleich dem zweiten Energiegrenzwert ist.

4. Verfahren nach einem der vorhergehenden Ansprüche,
**dadurch gekennzeichnet, dass**
die Punkte der dritten Untermenge (8b, 8c) und/oder der vierten Untermenge (9b, 9c) nur dann als Artefakte markiert werden, wenn sich die räumliche Ausdehnung der vierten Untermenge (9b, 9c) von der räumlichen Ausdehnung der dritten Untermenge (8b, 8c) wenigstens um einen vorgegebenen Schwellwert unterscheidet.

5. Verfahren nach einem der vorhergehenden Ansprüche,
**dadurch gekennzeichnet, dass**
- mittels des Sensorsystems (2) wenigstens eine weitere Punktwolke während wenigstens eines entsprechenden weiteren Messzeitraums erzeugt wird, wobei Punkte der wenigstens einen weiteren Punktwolke jeweils durch eine räumliche Position und einen Energiekennwert beschrieben werden;
- für jede der wenigstens einen weiteren Punktwolke mittels der Recheneinheit (3)
- eine fünfte Untermenge identifiziert wird, wobei der jeweilige Energiekennwert jedes Punktes der fünften Untermenge größer oder gleich dem ersten Energiegrenzwert ist;
- eine sechste Untermenge identifiziert wird, wobei die jeweilige Position jedes Punktes der sechsten Untermenge innerhalb einer vordefinierten räumlichen Umgebung der Punkte der fünften Untermenge der jeweiligen weiteren Punktwolke liegt; und
- die Punkte der vierten Untermenge (9b, 9c) abhängig von einer räumlichen Ausdehnung der sechsten Untermenge als Artefakte markiert werden.

6. Verfahren nach einem der vorhergehenden Ansprüche,
**dadurch gekennzeichnet, dass**
- die räumliche Position abhängig von einer jeweiligen radialen Entfernung von dem Sensorsystem (2) bestimmt wird; und
- nur Punkte der ersten Punktwolke (8) als Teil der dritten Untermenge (8b, 8c) identifiziert werden, deren radiale Entfernung in einer vorgegeben radialen Umgebung der ersten Untermenge (8a) liegt und/oder nur Punkte der zweiten Punktwolke (9) als Teil der vierten Untermenge (9b, 9c) identifiziert werden, deren radiale Entfernung in einer vorgegeben radialen Umgebung der zweiten Untermenge (9a) liegt.

7. Verfahren nach einem der vorhergehenden Ansprüche,
**dadurch gekennzeichnet, dass**
- die räumliche Position abhängig von einem horizontalen Einfallswinkel der entsprechenden reflektierten Anteile (6') bestimmt wird; und
- nur Punkte der ersten Punktwolke (8) als Teil der dritten Untermenge (8b, 8c) identifiziert werden, deren horizontaler Einfallswinkel in einer vorgegebenen horizontalen Winkelumgebung der ersten Untermenge (8a) liegt und/oder nur Punkte der zweiten Punktwolke (9) als Teil der vierten Untermenge (9b, 9c) identifiziert werden, deren horizontaler Einfallswinkel in einer vorgegebenen horizontalen Winkelumgebung der zweiten Untermenge (9a) liegt.

8. Verfahren zur automatischen Objekterkennung,
**dadurch gekennzeichnet, dass**
- ein aktives Sensorsystem (2) gemäß einem Verfahren nach einem der vorhergehenden Ansprüche betrieben wird; und
- mittels der Recheneinheit (3) die Objekterkennung abhängig von der zweiten Punktwolke (9) durchgeführt wird, wobei die Punkte der dritten Untermenge (8b, 8c) und/oder die Punkte der vierten Untermenge (9b, 9c) nur dann berücksichtigt werden, wenn sie nicht als Artefakte markiert sind.

9. Aktives Sensorsystem aufweisend
- eine Emittereinheit (5), die dazu eingerichtet ist, während eines ersten Messzeitraums und während eines zweiten Messzeitraums jeweils elektromagnetische Strahlung (6) in eine Umgebung des Sensorsystems (2) zu emittieren;
- eine Detektoreinheit (4), die dazu eingerichtet ist, während des ersten Messzeitraums erste reflektierte Anteile (6') der Strahlung (6) zu detektieren und basierend darauf wenigstens ein erstes Detektorsignal zu erzeugen und während des zweiten Messzeitraums zweite reflektierte Anteile (6') der Strahlung (6) zu detektieren und basierend darauf wenigstens ein zweites Detektorsignal zu erzeugen; und
- eine Recheneinheit (3), die dazu eingerichtet ist, basierend auf dem wenigstens einen ersten Detektorsignal eine erste Punktwolke (8) zu erzeugen und basierend auf dem wenigstens einen zweiten Detektorsignal eine zweite Punktwolke (9) zu erzeugen, wobei die erste und die zweite Punktwolke (8, 9) jeweils eine Vielzahl von Punkten enthalten, die jeweils durch eine räumliche Position und einen Energiekennwert beschrieben sind;
wobei die Recheneinheit (3) dazu eingerichtet ist,
- eine erste Untermenge (8a) der ersten Punktwolke (8) und eine zweite Untermenge (9a) der zweiten Punktwolke (9) zu identifizieren, wobei der jeweilige Energiekennwert jedes Punktes der ersten Untermenge (8a) und der zweiten Untermenge (9a) größer oder gleich einem vorgegebenen ersten Energiegrenzwert ist;
- eine dritte Untermenge (8b, 8c) der ersten Punktwolke (8) und eine vierte Untermenge (9b, 9c) der zweiten Punktwolke (9) zu identifizieren, wobei die jeweilige Position jedes Punktes der dritten Untermenge (8b, 8c) innerhalb einer vordefinierten räumlichen Umgebung der Punkte der ersten Untermenge (8a) liegt und die jeweilige Position jedes Punktes der vierten Untermenge (9b, 9c) innerhalb einer vordefinierten räumlichen Umgebung der Punkte der zweiten Untermenge (9a) liegt;
- eine räumliche Ausdehnung der vierten Untermenge (9b, 9c) mit einer räumlichen Ausdehnung der dritten Untermenge (8b, 8c) zu vergleichen,
und
- die Punkte der dritten Untermenge (8b, 8c) und/oder die Punkte der vierten Untermenge (9b, 9c) abhängig von einem Ergebnis des Vergleichs als Artefakte zu markieren,
- **dadurch gekennzeichnet, dass** die Recheneinheit (3) dazu eingerichtet ist eine erste Sensitivität des Sensorsystems (2) einzustellen, um die erste Punktwolke (8) während des ersten Messzeitraums zu erzeugen; und
- eine zweite Sensitivität des Sensorsystems (2) einzustellen, die von der ersten Sensitivität verschieden ist, um die zweite Punktwolke (9) während des zweiten Messzeitraums zu erzeugen.

10. Aktives Sensorsystem nach Anspruch 9,
**dadurch gekennzeichnet, dass**
das Sensorsystem (2) als Radarsensorsystem oder als Lidarsensorsystem ausgestaltet ist.

11. Aktives Sensorsystem nach Anspruch9,
**dadurch gekennzeichnet, dass**
das Sensorsystem (2) als Laserscanner ausgestaltet ist und eine Umlenkeinheit beinhaltet, die dazu eingerichtet ist, die emittierte Strahlung (6) umzulenken, um einen horizontalen Aussendewinkel der emittierten Strahlung (6) festzulegen und die reflektierten Anteile (6') umzulenken, um einen horizontalen Einfallswinkel der reflektierten Anteile (6') festzulegen.

12. Aktives Sensorsystem nach Anspruch 11,
**dadurch gekennzeichnet, dass**
- die Recheneinheit (3) dazu eingerichtet ist, für jeden Punkt der ersten Punktwolke (8) den Energiekennwert abhängig von einer Pulsweite eines Signalpulses des wenigstens einen ersten Detektorsignals zu bestimmen; und/oder
- die Recheneinheit (3) dazu eingerichtet ist, für jeden Punkt der zweiten Punktwolke (9) den Energiekennwert abhängig von einer Pulsweite eines Signalpulses des wenigstens einen zweiten Detektorsignals zu bestimmen.

13. Elektronisches Fahrzeugführungssystem für ein Kraftfahrzeug (1), das Fahrzeugführungssystem aufweisend ein aktives Sensorsystem (2) nach einem der Ansprüche 9 bis 12.

14. Computerprogrammprodukt mit Befehlen, die bei Ausführung durch ein aktives Sensorsystem (2) nach einem der Ansprüche 9 bis 12 das aktive Sensorsystem (2) dazu veranlassen, ein Verfahren nach einem der Ansprüche 1 bis 8 durchzuführen.

## Claims

1. Method for operating an active sensor system (2), wherein electromagnetic radiation (6) is emitted into an environment of the sensor system (2) by means of the sensor system (2) in each case in order to generate a first point cloud (8) during a first measurement period of time and to generate a second point cloud (9) during a second measurement period of time and reflected components (6') of the emitted radiation (6) are detected and the first and the second point cloud (9) each contain a plurality of points, which are each described by a spatial position and an energy characteristic value,
wherein, by means of a computing unit (3) of the sensor system (2),
- a first subset (8a) of the first point cloud (8) and a second subset (9a) of the second point cloud (9) are identified, wherein the respective energy characteristic value of each point in the first subset (8a) and the second subset (9a) is greater than or equal to a predetermined first energy limiting value;
- a third subset (8b, 8c) of the first point cloud (8) and a fourth subset (9b, 9c) of the second point cloud (9) are identified, wherein the respective position of each point in the third subset (8b, 8c) is within a predefined spatial environment of the points in the first subset (8a) and the respective position of each point in the fourth subset (9b, 9c) is within a predefined spatial environment of the points in the second subset (9a);
- a spatial extent of the fourth subset (9b, 9c) is compared with a spatial extent of the third subset (8b, 8c),
and the points in the third subset (8b, 8c) and/or the fourth subset (9b, 9c) are marked as artefacts depending on a result of the comparison,
**characterized in that** a first sensitivity of the sensor system (2) is set in order to generate the first point cloud (8) during the first measurement period of time; and
a second sensitivity of the sensor system (2), which is different from the first sensitivity, is set in order to generate the second point cloud (9) during the second measurement period of time.

2. Method according to Claim 1,
**characterized in that**
the sensor system (2) is moved between the first measurement period of time and the second measurement period of time and/or during the first measurement period of time and/or during the second measurement period of time, so that a distance of the sensor system (2) to an object (7) in the environment which is represented by the first subset (8a) and the second subset (9a) is changed.

3. Method according to one of the preceding claims,
**characterized in that**
- only points in the first point cloud (8) whose energy characteristic value is less than or equal to a predetermined second energy limiting value are identified as part of the third subset (8b, 8c), wherein the second energy limiting value is less than the first energy limiting value; and/or
- only points in the second point cloud (9) whose energy characteristic value is less than or equal to the second energy limiting value are identified as part of the fourth subset (9b, 9c).

4. Method according to one of the preceding claims,
**characterized in that**
the points in the third subset (8b, 8c) and/or the fourth subset (9b, 9c) are only marked as artefacts if the spatial extent of the fourth subset (9b, 9c) differs from the spatial extent of the third subset (8b, 8c) at least by a predetermined threshold value.

5. Method according to one of the preceding claims,
**characterized in that**
- by means of the sensor system (2), at least one further point cloud is generated during at least one corresponding further measurement period of time, wherein points in the at least one further point cloud are each described by a spatial position and an energy characteristic value;
- for each of the at least one further point cloud, by means of the computing unit (3),
- a fifth subset is identified, wherein the respective energy characteristic value of each point in the fifth subset is greater than or equal to the first energy limiting value;
- a sixth subset is identified, wherein the respective position of each point in the sixth subset is within a predefined spatial environment of the points in the fifth subset of the respective further point cloud; and
- the points in the fourth subset (9b, 9c) are marked as artefacts in dependence on a spatial extent of the sixth subset.

6. Method according to one of the preceding claims,
**characterized in that**
- the spatial position is determined in dependence on a respective radial distance from the sensor system (2); and
- only points in the first point cloud (8) whose radial distance is in a predetermined radial environment of the first subset (8a) are identified as part of the third subset (8b, 8c) and/or only points in the second point cloud (9) whose radial distance is in a predetermined radial environment of the second subset (9a) are identified as part of the fourth subset (9b, 9c).

7. Method according to one of the preceding claims,
**characterized in that**
- the spatial position is determined in dependence on a horizontal angle of incidence of the corresponding reflected components (6'); and
- only points in the first point cloud (8) whose horizontal angle of incidence is in a predetermined horizontal angle environment of the first subset (8a) are identified as part of the third subset (8b, 8c) and/or only points in the second point cloud (9) whose horizontal angle of incidence is in a predetermined horizontal angle environment of the second subset (9a) are identified as part of the fourth subset (9b, 9c).

8. Method for automatic object detection,
**characterized in that**
- an active sensor system (2) is operated according to a method according to one of the preceding claims; and
- by means of the computing unit (3), the object detection is carried out in dependence on the second point cloud (9), wherein the points in the third subset (8b, 8c) and/or the points in the fourth subset (9b, 9c) are only taken into consideration if they are not marked as artefacts.

9. Active sensor system including
- an emitter unit (5), which is configured to emit electromagnetic radiation (6) into an environment of the sensor system (2) in each case during a first measurement period of time and during a second measurement period of time;
- a detector unit (4), which is configured, during the first measurement period of time, to detect first reflected components (6') of the radiation (6) and to generate at least one first detector signal based thereon and, during the second measurement period of time, to detect second reflected components (6') of the radiation (6) and to generate at least one second detector signal based thereon; and
- a computing unit (3), which is configured to generate a first point cloud (8) based on the at least one first detector signal and to generate a second point cloud (9) based on the at least one second detector signal, wherein the first and the second point cloud (8, 9) each contain a plurality of points, which are each described by a spatial position and an energy characteristic value;
wherein the computing unit (3) is configured
- to identify a first subset (8a) of the first point cloud (8) and a second subset (9a) of the second point cloud (9), wherein the respective energy characteristic value of each point in the first subset (8a) and the second subset (9a) is greater than or equal to a predetermined first energy limiting value;
- to identify a third subset (8b, 8c) of the first point cloud (8) and a fourth subset (9b, 9c) of the second point cloud (9), wherein the respective position of each point in the third subset (8b, 8c) is within a predefined spatial environment of the points in the first subset (8a) and the respective position of each point in the fourth subset (9b, 9c) is within a predefined spatial environment of the points in the second subset (9a);
- to compare a spatial extent of the fourth subset (9b, 9c) with a spatial extent of the third subset (8b, 8c),
and
- to mark the points in the third subset (8b, 8c) and/or the points in the fourth subset (9b, 9c) as artefacts depending on a result of the comparison,
- **characterized in that** the computing unit (3) is configured to set a first sensitivity of the sensor system (2) in order to generate the first point cloud (8) during the first measurement period of time; and
- to set a second sensitivity of the sensor system (2), which is different from the first sensitivity, in order to generate the second point cloud (9) during the second measurement period of time.

10. Active sensor system according to Claim 9,
**characterized in that**
the sensor system (2) is designed as a radar sensor system or as a lidar sensor system.

11. Active sensor system according to Claim 9,
**characterized in that**
the sensor system (2) is designed as a laser scanner and includes a deflection unit, which is configured to deflect the emitted radiation (6), in order to define a horizontal emission angle of the emitted radiation (6), and to deflect the reflected components (6'), in order to define a horizontal angle of incidence of the reflected components (6').

12. Active sensor system according to Claim 11,
**characterized in that**
- the computing unit (3) is configured, for each point in the first point cloud (8), to determine the energy characteristic value in dependence on a pulse width of a signal pulse of the at least one first detector signal; and/or
- the computing unit (3) is configured, for each point in the second point cloud (9), to determine the energy characteristic value in dependence on a pulse width of a signal pulse of the at least one second detector signal.

13. Electronic vehicle control system for a motor vehicle (1), the vehicle control system including an active sensor system (2) according to one of Claims 9 to 12.

14. Computer program product with instructions which, when executed by an active sensor system (2) according to one of Claims 9 to 12, prompt the active sensor system (2) to carry out a method according to one of Claims 1 to 8.

## Revendications

1. Procédé pour faire fonctionner un système capteur (2) actif, un rayonnement électromagnétique (6) étant respectivement émis dans un environnement du système capteur (2) au moyen du système capteur (2) en vue de générer un premier nuage de points (8) pendant une première période de mesure et en vue de générer un deuxième nuage de points (9) pendant une deuxième période de mesure, et des parties réfléchies (6') du rayonnement émis (6) étant détectées, et le premier et le deuxième nuage de points (9) contenant respectivement une pluralité de points qui sont respectivement décrits par une position spatiale et une valeur caractéristique d'énergie,
au moyen d'une unité de calcul (3) du système capteur (2)
- un premier sous-ensemble (8a) du premier nuage de points (8) et un deuxième sous-ensemble (9a) du deuxième nuage de points (9) étant identifiés, la valeur caractéristique d'énergie respective de chaque point du premier sous-ensemble (8a) et du deuxième sous-ensemble (9a) étant égale ou supérieure à une première valeur limite d'énergie prédéfinie ;
- un troisième sous-ensemble (8b, 8c) du premier nuage de points (8) et un quatrième sous-ensemble (9b, 9c) du deuxième nuage de points (9) étant identifiés, la position respective de chaque point du troisième sous-ensemble (8b, 8c) étant située à l'intérieur d'un environnement spatial prédéfini des points du premier sous-ensemble (8a) et la position respective de chaque point du quatrième sous-ensemble (9b, 9c) étant située à l'intérieur d'un environnement spatial prédéfini des points du deuxième sous-ensemble (9a) ;
- une extension spatiale du quatrième sous-ensemble (9b, 9c) étant comparée à une extension spatiale du troisième sous-ensemble (8b, 8c),
et les points du troisième sous-ensemble (8b, 8c) et/ou du quatrième sous-ensemble (9b, 9c) étant marqués comme artefacts en fonction d'un résultat de la comparaison, **caractérisé en ce qu'**une première sensibilité du système capteur (2) est réglée afin de générer le premier nuage de points (8) pendant la première période de mesure ; et une deuxième sensibilité du système de capteur (2), qui est différente de la première sensibilité, est réglée afin de générer le deuxième nuage de points (9) pendant la deuxième période de mesure.

2. Procédé selon la revendication 1,
**caractérisé en ce que**
le système capteur (2) est déplacé entre la première période de mesure et la deuxième période de mesure et/ou pendant la première période de mesure et/ou pendant la deuxième période de mesure, de sorte qu'un écart entre le système capteur (2) et un objet (7) dans l'environnement, lequel est représenté par le premier sous-ensemble (8a) et le deuxième sous-ensemble (9a), est modifié.

3. Procédé selon l'une des revendications précédentes,
**caractérisé en ce que**
- seuls sont identifiés en tant que partie du troisième sous-ensemble (8b, 8c) les points du premier nuage de points (8) dont la valeur caractéristique d'énergie est inférieure ou égale à une deuxième valeur limite d'énergie prédéfinie, la deuxième valeur limite d'énergie étant inférieure à la première valeur limite d'énergie ; et/ou
- seuls sont identifiés en tant que partie du quatrième sous-ensemble (9b, 9c) les points du deuxième nuage de points (9) dont la valeur caractéristique d'énergie est inférieure ou égale à la deuxième valeur limite d'énergie.

4. Procédé selon l'une des revendications précédentes,
**caractérisé en ce que**
les points du troisième sous-ensemble (8b, 8c) et/ou du quatrième sous-ensemble (9b, 9c) ne sont marqués comme artefacts que si l'étendue spatiale du quatrième sous-ensemble (9b, 9c) diffère de l'étendue spatiale du troisième sous-ensemble (8b, 8c) d'au moins une valeur de seuil prédéfinie.

5. Procédé selon l'une des revendications précédentes,
**caractérisé en ce que**
- au moins un nuage de points supplémentaire est généré au moyen du système capteur (2) pendant au moins une période de mesure supplémentaire correspondante, les points de l'au moins un nuage de points supplémentaire étant décrits respectivement par une position spatiale et une valeur caractéristique d'énergie ;
- pour chacun de l'au moins un nuage de points supplémentaire, au moyen de l'unité de calcul (3),
- un cinquième sous-ensemble est identifié, la valeur caractéristique d'énergie respective de chaque point du cinquième sous-ensemble étant égale ou supérieure à la première valeur limite d'énergie ;
- un sixième sous-ensemble est identifié, la position respective de chaque point du sixième sous-ensemble se trouvant à l'intérieur d'un environnement spatial prédéfini des points du cinquième sous-ensemble du nuage de points supplémentaire respectif ; et
- les points du quatrième sous-ensemble (9b, 9c) sont marqués comme artefacts en fonction d'une extension spatiale du sixième sous-ensemble.

6. Procédé selon l'une des revendications précédentes,
**caractérisé en ce que**
- la position spatiale est déterminée en fonction d'une distance radiale respective par rapport au système capteur (2) ; et
- seuls sont identifiés comme faisant partie du troisième sous-ensemble (8b, 8c) les points du premier nuage de points (8) dont la distance radiale se trouve dans un environnement radial prédéfini du premier sous-ensemble (8a) et/ou seuls sont identifiés comme faisant partie du quatrième sous-ensemble (9b, 9c) les points du deuxième nuage de points (9) dont la distance radiale se trouve dans un environnement radial prédéfini du deuxième sous-ensemble (9a).

7. Procédé selon l'une des revendications précédentes,
**caractérisé en ce que**
- la position spatiale est déterminée en fonction d'un angle d'incidence horizontal des parties réfléchies (6') correspondantes ; et
- seuls sont identifiés comme faisant partie du troisième sous-ensemble (8b, 8c) les points du premier nuage de points (8) dont l'angle d'incidence horizontal se trouve dans un environnement angulaire horizontal prédéfini du premier sous-ensemble (8a) et/ou seuls sont identifiés comme faisant partie du quatrième sous-ensemble (9b, 9c) les points du deuxième nuage de points (9) dont l'angle d'incidence horizontal se trouve dans un environnement angulaire horizontal prédéfini du deuxième sous-ensemble (9a).

8. Procédé de reconnaissance automatique d'objets,
**caractérisé en ce que**
- un système capteur (2) actif est exploité conformément à un procédé selon l'une des revendications précédentes ; et
- la reconnaissance d'objets est effectuée au moyen de l'unité de calcul (3) en fonction du deuxième nuage de points (9), les points du troisième sous-ensemble (8b, 8c) et/ou les points du quatrième sous-ensemble (9b, 9c) n'étant pris en compte que s'ils ne sont pas marqués comme artefacts.

9. Système capteur actif possédant
- une unité d'émission (5) qui est conçue pour émettre respectivement un rayonnement électromagnétique (6) dans un environnement du système capteur (2) pendant une première période de mesure et pendant une deuxième période de mesure ;
- une unité de détection (4) qui est conçue pour détecter, pendant la première période de mesure, des premières parties (6') réfléchies du rayonnement (6) et, en se basant sur celles-ci, pour générer au moins un premier signal de détecteur, et pour détecter, pendant la deuxième période de mesure, des deuxièmes parties (6') réfléchies du rayonnement (6) et, en se basant sur celles-ci, pour générer au moins un deuxième signal de détecteur ; et
- une unité de calcul (3) qui est conçue pour, sur la base de l'au moins un premier signal de détecteur, générer un premier nuage de points (8) et, sur la base de l'au moins un deuxième signal de détecteur, générer un deuxième nuage de points (9), les premier et deuxième nuages de points (8, 9) contenant respectivement une pluralité de points qui sont chacun décrits par une position spatiale et une valeur caractéristique d'énergie ;
l'unité de calcul (3) étant conçue pour
- identifier un premier sous-ensemble (8a) du premier nuage de points (8) et un deuxième sous-ensemble (9a) du deuxième nuage de points (9), la valeur caractéristique d'énergie respective de chaque point du premier sous-ensemble (8a) et du deuxième sous-ensemble (9a) étant égale ou supérieure à une première valeur limite d'énergie prédéfinie ;
- identifier un troisième sous-ensemble (8b, 8c) du premier nuage de points (8) et un quatrième sous-ensemble (9b, 9c) du deuxième nuage de points (9), la position respective de chaque point du troisième sous-ensemble (8b, 8c) étant située à l'intérieur d'un environnement spatial prédéfini des points du premier sous-ensemble (8a) et la position respective de chaque point du quatrième sous-ensemble (9b, 9c) étant située à l'intérieur d'un environnement spatial prédéfini des points du deuxième sous-ensemble (9a) ;
- comparer une extension spatiale du quatrième sous-ensemble (9b, 9c) à une extension spatiale du troisième sous-ensemble (8b, 8c),
et
- marquer les points du troisième sous-ensemble (8b, 8c) et/ou les points du quatrième sous-ensemble (9b, 9c) comme artefacts en fonction d'un résultat de la comparaison,
- **caractérisé en ce que** l'unité de calcul (3) est conçue pour régler une première sensibilité du système capteur (2) afin de générer le premier nuage de points (8) pendant la première période de mesure ; et
- régler une deuxième sensibilité du système de capteur (2), qui est différente de la première sensibilité, afin de générer le deuxième nuage de points (9) pendant la deuxième période de mesure.

10. Système capteur actif selon la revendication 9,
**caractérisé en ce que**
le système capteur (2) est réalisé sous la forme d'un système capteur radar ou d'un système capteur lidar.

11. Système capteur actif selon la revendication 9,
**caractérisé en ce que**
le système capteur (2) est réalisé sous la forme d'un dispositif de balayage à laser et comprend une unité de déviation qui est conçue pour dévier le rayonnement (6) émis afin de déterminer un angle d'émission horizontal du rayonnement (6) émis et pour dévier les parties réfléchies (6') afin de déterminer un angle d'incidence horizontal des parties réfléchies (6').

12. Système capteur actif selon la revendication 11,
**caractérisé en ce que**
- l'unité de calcul (3) est conçue pour déterminer, pour chaque point du premier nuage de points (8), la valeur caractéristique d'énergie en fonction d'une largeur d'impulsion d'une impulsion de signal de l'au moins un premier signal de détecteur ; et/ou
- l'unité de calcul (3) est conçue pour déterminer, pour chaque point du deuxième nuage de points (9), la valeur caractéristique d'énergie en fonction d'une largeur d'impulsion d'une impulsion de signal de l'au moins un deuxième signal de détecteur.

13. Système électronique de guidage de véhicule pour un véhicule automobile (1), le système de guidage de véhicule possédant un système capteur (2) actif selon l'une des revendications 9 à 12.

14. Produit de programme informatique comprenant des instructions qui, lors de l'exécution par un système capteur (2) actif selon l'une des revendications 9 à 12, amènent le système capteur (2) actif à mettre en œuvre un procédé selon l'une des revendications 1 à **8.**
